# EUROPÄISCHE PATENTSCHRIFT

(11) **EP 0 577 005 B1**
(45) Veröffentlichungstag und Bekanntmachung des Hinweises auf die Patenterteilung: **20.09.1995**
(21) Anmeldenummer: 93110079.6
(22) Anmeldetag: 24.06.1993
(51) Int. Cl.: F16L 11/08

(54) **Kraftstoffzuleitung**
Fuel line
Conduite de carburant

(30) Priorität: 03.07.1992 DE 4221806
(43) Veröffentlichungstag der Anmeldung: 05.01.1994
(73) Patentinhaber: Krupp MaK Maschinenbau GmbH, 24159 Kiel (DE)
(72) Erfinder: Nagel, Jürgen, Dipl.-Ing., D-2303 Gettorf (DE)
(74) Vertreter: Hansmann, Dierk, Dipl.-Ing.

(56) Entgegenhaltungen:
- EP-A- 0 024 512
- GB-A- 2 163 514
- CHEMICAL PATENTS INDEX, DOCUMENTATION ABSTRACTS JOURNAL Section Ch, Week 9036, Derwent Publications Ltd., London, GB; Class A01, AN 90-271268 & JP-A-2 190 693 (TOKAI RUBBER IND KK)

## Beschreibung

Die Erfindung bezieht sich auf eine Kraftstoffzuleitung für elastisch aufgestellte Großmotoren als ölbeständige, hochdruckfähige und hochtemperaturbelastbare Leitung zur Verbindung mit einer ortsfesten Versorgung, wobei ein Kunststoffschlauch als Seele durch ein Metalldrahtgeflecht umgeben ist und die Enden der Zuleitung eine in den Kunststoffschlauch eingesetzte Innenhülse mit einer Befestigungsarmatur aufweisen, die durch eine übergreifende Preßhülse wenigstens den Kunststoffschlauch und das Metallgeflecht mit der Innenhülse festsetzt.

Schlauchverbindungen mit einem mehrschichtigen Aufbau und entsprechenden Befestigungsarmaturen sind aus den DE-PS 35 29 889, DE-OS 39 20 810 und DE-OS 35 35 878 in vielfältigen Ausgestaltungen bekannt. Es besteht aber der Mangel, daß diese bekannten Ausbildungen, wie die Praxis gezeigt hat, nicht für pulsierenden Druck einsetzbar sind sowie gleichzeitig den Flammschutzbestimmungen der Klassifikationsgesellschaften für Schiffsdieselmotoren entsprechen und weiterhin nicht die geforderten Bedingungen bei hohen Temperaturen und einer chemischen Aggresivität des zugeführten Kraftstoffs erfüllen.

Für den zunehmenden Einsatzfall bei einer elastischen Motorlagerung, wie für den Einsatz bei Schiffsdieselmotoren, besteht die Problematik, eine Kraftstoffzuleitung als elastische Verbindung unter Berücksichtigung der verwendeten Betriebsstoffe, mit chemischer Aggressivität, dynamischer Hochdruckbelastung, mechanischer Schwingbelastung sowie Temperaturbelastung , eine lange Standfestigkeit zu gewährleisten.

Es ist auch bekannt für diesen Zweck, Rohrwendeln oder Schlauchleitungen mit Kompensatoren einzusetzen. Hierbei haben sich insbesondere Schwierigkeiten bei der Schwerölversorgung herausgestellt, da Elastomer-Schläuche oberhalb von 120 Grad verspröden und dadurch undicht werden. Rohrwendeln sind relativ aufwendig, da sie beispielsweise mit Drahtseildämpfern in ihrem Eigenschwingverhalten begrenzt werden müssen und außerdem tolerierte Einbaumaße erfordern.

Aufgabe der Erfindung ist es, eine gattungsgemäße Kraftstoffversorgung zu verbessern und in vorgefertigter Bauweise einem Aufbau der Kraftstoffzuleitung zu schaffen, der den Erfordernissen des Einsatzes bezüglich Temperatur, Hochdruck und der Betriebsstoffe Rechnung trägt sowie einen einfachen Einbau mit einer hohen Standzeit ermöglicht.

Die Lösung dieser Aufgabe erfolgt erfindungsgemäß dadurch, daß der Künststoffschlauch aus einem schweröl- und temperaturbeständigen Material, wie Fluorethylenpropylan, besteht, der von zwei Wickellagen Stahldraht und eine als Schutzmantel umgebende Klöppellage Stahldraht umgeben ist sowie zusätzlich einen Flammschutz aus Mineralfaser als Kreuzgeflechtlage aufweist und ein Metalldrahtgeflecht als äußeren Schutzmantel trägt.

Hierdurch wird ermöglicht, daß alle Betriebs-Bedingungen erfüllbar sind und die Flexibilität durch eine entsprechende Anpassungsfähigkeit der gebildeten unterschiedlichen Schichten ermöglicht sowie ein für die Einsatzzwecke erforderlicher Flammschutz im Brandfall sowie ein Berührungsschutz ohne zusätzliche Abschirmungen gewährleistet wird. Durch den Aufbau des Flammschutzes als Kreuzgeflechtlage ist es auch möglich, diesen Schutz bis in den Bereich der Anschlußstütze zu schieben, um auch im Übergangsbereich einen Schutz zu gewährleisten.

Eine spezielle Ausbildung wird dadurch geschaffen, daß der äußere Schutzmantel durch eine Klöppellage VA-Stahldraht gebildet ist.

Eine vorteilhafte Ausbildung zur Gewährleistung eines Schutzes im Bereich der Endstücke ist vorgesehen, daß der oberhalb der Preßhülse liegende Mineralfasermantel und der äußere Schutzmantel als Metalldrahtgeflecht durch eine Schelle auf der Preßhülse festlegbar ist.

Um die Verletzungsgefahr durch das aufgebrachte Metalldrahtgeflecht zu verhindern, ist vorgesehen, daß die Endbereiche durch einen Schrumpfschlauch abgedeckt sind.

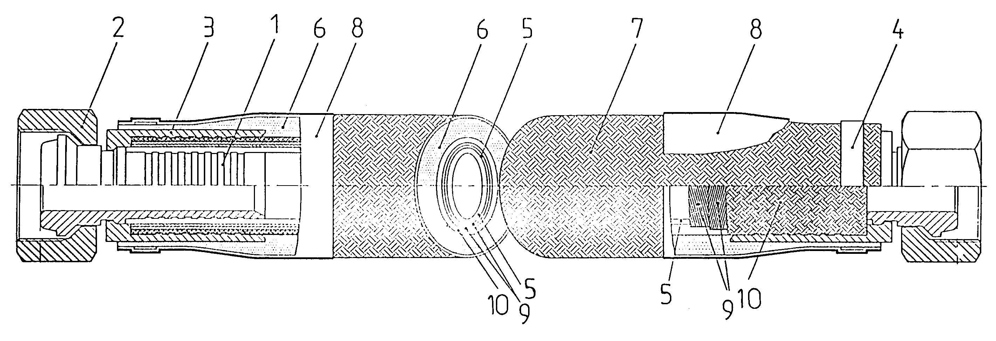

In der Zeichnung ist eine Kraftstoffzuleitung gemäß der Erfindung schematisch dargestellt.

Die Kraftstoffzuleitung ist bogenförmig zwischen dem nicht näher dargestellten elastisch aufgestellten Motor und der Versorgung angeordnet und besteht aus einem Kunststoffschlauch 5 aus Fluorethylenpropylen für den Kraftstoff. Dieser Kunststoffschlauch 5 ist durch zwei Wickellagen Stahldraht 9 und eine als Schutzmantel dienende Klöppellage Stahldraht 10 ummantelt. Auf diese Ausbildung ist der Flammschutz 6 aus Mineralfaser als Kreuzgeflechtlage angeordnet und durch einen äußeren Schutzmantel als eine Klöppellage VA-Stahldraht 7 umgeben. Hierdurch wird eine flexible Anordnung gebildet, wobei die einzelne gebildeten Umhüllungen sich gegeneinander bewegen und entsprechend den vorliegenden Verhältnissen einstellen können.

In den Endbereichen der Kraftstoffzuleitung sind jeweils Verbindungsverschraubungen 2 in Form einer sogenannten Ermeto-Verschraubung angeordnet. Hierzu wird eine Innenhülse 1 durch den Kunststoffschlauch 5 aufgenommen und dieser Kunststoffschlauch 5 einschließlich der Wickellagen 9 sowie der Klöppellage Stahldraht 10 auf der Innenhülse über eine korrespondierende Preßhülse 3 festgelegt. Oberhalb der Preßhülse 3 ist die Klöppellage VA-Stahldraht 7 und der Flammschutz 6 aus Mineralfaser angeordnet und über eine Schelle 4 gehalten. Die beiden Enden sind zusätzlich mit einem Schrumpfschlauch 8 versehen, um die Verletzungsgefahr durch den VA-Stahldraht 7 zu vermeiden.

## Patentansprüche

1. Kraftstoffzuleitung für elastisch aufgestellte Großmotoren als ölbeständige, hochdruckfähige und hochtemperaturbelastbare Leitung zur Verbindung mit einer ortsfesten Versorgung, wobei ein Kunststoffschlauch (5) als Seele durch ein Metalldrahtgeflecht (9, 10) umgeben ist und die Enden der Zuleitung eine in den Kunststoffschlauch (5) eingesetzte Innenhülse (1) mit einer Befestigungsarmatur (2) aufweisen, die durch eine übergreifende Preßhülse (3) wenigstens den Kunststoffschlauch (5) und das Metallgeflecht (9, 10) mit der Innenhülse (1) festsetzt, dadurch gekennzeichnet, daß der Kunststoffschlauch (5) aus einem schweröl- und temperaturbeständigen Material, wie Fluorethylenpropylan, besteht, der von zwei Wickellagen Stahldraht (9) und eine als Schutzmantel umgebende Klöppellage Stahldraht (10) umgeben ist sowie zusätzlich einen Flammschutz aus Mineralfaser als Kreuzgeflechtlage (6) aufweist und ein Metalldrahtgeflecht als äußeren Schutzmantel (7) trägt.

2. Kraftstoffzuleitung nach Anspruch 1, dadurch gekennzeichnet, daß der äußere Schutzmantel durch eine Klöppellage VA-Stahldraht (7) gebildet ist.

3. Kraftstoffzuleitung nach Anspruch 1 oder 2, dadurch gekennzeichnet, daß der oberhalb der Preßhülse liegende Mineralfasermantel (6) und der äußere Schutzmantel (7) als Metalldrahtgeflecht durch eine Schelle (4) auf der Preßhülse (3) festlegbar ist.

4. Kraftstoffzuleitung nach einem der Ansprüche 1 bis 3, dadurch gekennzeichnet, daß die Endbereiche durch einen Schrumpfschlauch (8) abgedeckt sind.

## Claims

1. Fuel supply line for flexibly mounted large engines in the form of an oil-resistant line, which is capable of withstanding high pressures and can be subjected to high temperature loadings, for connection to a positionally fixed supply, wherein a plastics hose (5) as the core is surrounded by a metallic wire mesh (9, 10) and the ends of the supply line have an inner sleeve (1) inserted in the plastics hose (5) and having an attachment fitting (2) which, by means of an overlapping compression sleeve (3), fixes at least the plastics hose (5) and the metallic mesh (9, 10) to the inner sleeve (1), characterized in that the plastics hose (5) consists of a material, such as fluoroethylene propylane, resistant to heavy oil and temperature, is surrounded by two wound plies of steel wire (9) and by a braided ply of steel wire (10) surrounding it as a protective sheath, and also additionally has a flame guard made of mineral fibre in the form of a crossed mesh ply (6) and carries a metallic wire mesh as an outer protective sheath (7).

2. Fuel supply line according to claim 1, characterized in that the outer protective sheath is formed by a braided ply of vanadium steel wire (7).

3. Fuel supply line according to claim 1 or 2, characterized in that the mineral fibre sheath (6) located above the compression sleeve, and the outer protective sheath (7) in the form of a metallic wire mesh, can be secured in position on the compression sleeve (3) by a clip (4).

4. Fuel supply line according to one of claims 1 to 3, characterized in that the end regions are covered by a shrunk-on hose (8).

## Revendications

1. Conduite de carburant pour gros moteurs montés élastiquement, sous forme de conduite pouvant résister aux huiles, pouvant supporter de hautes pressions et pouvant être chargée à des températures élevées, destinée à être reliée à une alimentation fixe, conduite dans le cas de laquelle un tuyau flexible fait de matière synthétique (5) constituant une âme est entouré d'une enveloppe faite de fil de métal tressé (9,10) et dans le cas de laquelle les extrémités du canal d'arrivée contiennent un manchon interne (1) monté dans le tuyau flexible fait de matière synthétique (5) et muni d'une armature de fixation (2) qui fixe, dans un manchon de pression (3) prenant de dessus, au moins le tuyau flexible fait de matière synthétique (5) et l'enveloppe faite de fil de métal tressé (9,10) au manchon interne (1), la conduite de carburant étant caractérisée en ce que le tuyau flexible fait de matière synthétique (5) est composé d'une matière qui peut résister aux huiles lourdes et aux températures, telle que du poly-fluoroéthylène-propylène, matière qui est entourée de deux couches d'enroulements de fil d'acier (9) et d'une couche de fil d'acier se présentant en réseau (10) entourant en tant qu'enveloppe de protection les premières couches citées, qui est de plus munie d'une protection contre la flamme faite de fibre minérale se présentant sous la forme d'une couche tressée en croix (6) et qui porte un tissu tressé de fil de métal comme couche de protection externe (7).

2. Conduite de carburant suivant la revendication 1, caractérisé en ce que l'enveloppe de protection externe est formée par une couche se présentant en réseau de fil d'acier VA (7).

3. Conduite de carburant suivant l'une ou l'autre des revendications 1 et 2, caractérisée en ce que l'enveloppe faite de fibre minérale (6) qui se trouve au-dessus du manchon de pression et l'enveloppe de protection externe (7) se présentant sous la forme d'un tissu tressé de fil de métal peuvent être fixées sur le manchon de pression (3) à l'aide d'un étrier.

4. Conduite de carburant suivant l'une quelconque des revendications 1 à 3, caractérisée en ce que les parties d'extrémité sont couvertes par un tuyau flexible pouvant se contracter (8).
